# EUROPÄISCHE PATENTSCHRIFT

(11) **EP 1 143 126 B1**
(45) Veröffentlichungstag und Bekanntmachung des Hinweises auf die Patenterteilung: **21.05.2008**
(21) Anmeldenummer: 01107968.8
(22) Anmeldetag: 29.03.2001
(51) Int. Cl.: F02B 19/10, H01T 13/54

(54) **Vorkammer-Zündkerze mit Zusatzkraftstoff zur Entflammung sehr magerer Kraftstoff-Luft-Gemische, insbesondere für Gasmotoren**
Precombustion chamber with spark plug and additional fuel for igniting very lean mixtures, especially for gas engines
Préchambre de combustion avec bougie d'allumage et carburant additionnel pour allumer des mélanges extrêmement pauvres, en particulier pour des moteurs à gaz

(30) Priorität: 03.04.2000 DE 10016558
(43) Veröffentlichungstag der Anmeldung: 10.10.2001
(60) Teilanmeldung: 08004903.4
(73) Patentinhaber: Kuhnert, Dieter, Dr., D-74889 Sinsheim (DE)
(72) Erfinder: Kuhnert, Dieter Dr.-Ing., 74889 Sinsheim (DE); Latsch, Reinhard Dr.-Ing., 76530 Baden-Baden (DE)
(74) Vertreter: Naumann, Ulrich

(56) Entgegenhaltungen:
- DE-A- 2 743 495
- DE-A- 3 300 945
- DE-A- 19 819 197
- FR-A- 1 173 055
- US-A- 4 091 772
- US-A- 4 338 897
- US-A- 4 892 070
- DATABASE EPODOC [Online] EUROPEAN PATENT OFFICE, THE HAGUE, NL; XP002194034 & KR 9 612 347 B (HYUNDAI MOTOR CO LTD) 18. September 1996 (1996-09-18)

## Beschreibung

Die Erfindung betrifft ein Verfahren zur Entflammung sehr magerer Kraftstoff-Luft-Gemische mit einer am Rande eines Hauptbrennraums einer Brennkraftmaschine angeordneten fremdgezündeten Vorkammer-Zündkerze, die über Überströmkanäle mit dem Hauptbrennraum verbunden ist, wobei eine geringe Menge Zusatzkraftstoff ventilgesteuert in die Vorkammer eingebracht wird. Die Erfindung betrifft weiterhin eine zur Durchführung des Verfahrens geeignete Anordnung, insbesondere für die Anwendung bei Gasmotoren mit einer eine Zündstrecke umgebenden Vorkammer, die zum Hauptbrennraum führende, vorzugsweise tangential verlaufende Überströmkanäle aufweist, und mit einem Zusatzkraftstoff zuführenden, extrem dünnen Versorgungskanal, über den insbesondere mit einem Magnetventil zeitgesteuert unter hohem Druck stehender Kraftstoff insbesondere während des Verdichtungstaktes der Brennkraftmaschine zugemessen wird.

Zum Zünden von mit Luft und/oder Abgas verdünnten bzw. abgemagerten Kraftstoff-Luft-Gemischen in Brennkraftmaschinen ist es bekannt, eine fremdgezündete Vorkammer-Zündeinrichtung zu verwenden, bei der über vorzugsweise tangential verlaufende Überströmkanäle Gemisch aus dem Hauptbrennraum in die Vorkammer während des Kompressionstaktes eingedrückt wird, wobei fettes Kraftstoff-Luft-Zusatzgemisch oder Zusatzkraftstoff ventilgesteuert über einen Versorgungskanal in Form einer sogenannten Schichtladung in die Vorkammer eingebracht wird (KR9612347 B, DE-OS 24 50 980). Weiterhin ist bekannt, dass ein fettes Kraftstoff-Luft-Zusatzgemisch oder Zusatzkraftstoff ventilgesteuert über einen Versorgungskanal in den Bereich mindestens eines Überströmkanals ausserhalb der Vorkammer gelenkt wird. Dabei ergibt sich während des Kompressionstaktes in der Vorkammer eine Vermischung zwischen dem Hauptgemisch aus dem Brennraum und dem Zusatzgemisch bzw. Zusatzkraftstoff, die beide in die Vorkammer eingedrückt und dort vermischt werden (DE-OS 37 09 976).

Nachteilig an den bekannten Verfahren ist die hohe thermische Belastung der Ventile, weil in der unmittelbarer Nähe der Vorkammer (DE-OS 24 50 980) bzw. im vorderen Bereich der Vorkammer und in Brennraumnähe (Fig.3 und Fig. 10 von DE-OS 37 09 976) sehr hohe Temperaturen auftreten. Zudem ergeben sich bei grösseren Zufuhrkanalquerschnitten für das Zusatzgemisch bzw. den Zusatzkraftstoff auch bei zurückgezogenem Zumessventil (Fig. 1 von DE-OS 37 09 976) - insbesondere bei Zumischung von Zusatzgemisch - hohe thermische Belastungen für das Zumessventil und den Zufuhrkanal, da die Wärmeabfuhr bzw. Kühlung gering ist. Zusätzlich ergibt sich eine hohe mechanische Belastung des teilweise frei geführten Zufuhrkanals.

Ein weiterer Nachteil von DE-OS 37 09 976 besteht darin, dass die Zumischung des in die Vorkammer geführten Zusatzgemischs bzw. Zusatzkraftstoffs ausserhalb der Vorkammer erfolgt. Nachteilig ist weiterhin, dass die Zufuhr aus Kostengründen nur vor einem Überströmkanal durchgeführt wird. Die unsymmetrische Zufuhr vor der Vorkammer führt zu Inhomogenitäten in der Vorkammer und damit zu einer schwankenden Entflammung in der Vorkammer, d.h. zu schwankenden Energieumsetzungen im Hauptbrennraum. Nachteilig ist weiterhin, dass die Menge des benötigten Zusatzgemischs bzw. Zusatzkraftstoffs vergleichsweise groß ist, da die gesamte Kammer und teilweise auch der Bereich vor der Kammer mit Kraftstoff bzw. fettem Gemisch angereichert werden muss, um mit Sicherheit im Bereich einer Funkenstrecke in der Vorkammer gute Entflammungsbedingungen zu erhalten.

Die Aufgabe der Erfindung besteht daher darin, ein Verfahren der Eingangs genannten Gattung aufzuzeigen und eine zur Durchführung des Verfahrens geeignete Anordnung zu schaffen, durch die es möglich ist, durch Zuführung einer minimalen Kraftstoffmenge eine sichere Entflammung des Gemischs in der Vorkammer und eine sichere, gleichmässige und schnelle Energieumsetzung für das sehr magere Gemisch im Hauptbrennraum bei dem Verbrennungsverfahren und damit niedrige NOx-Emission zu erzielen. Gleichzeitig soll dabei die Temperatur eines zur Zumessung verwendeten Ventils besonders niedrig gehalten werden.

Diese Aufgabe wird erfindungsgemäss durch ein Verfahren gelöst, bei dem nur eine minimale Menge, vorzugsweise << 1 mg pro Arbeitsspiel der Brennkraftmaschine an Zusatzkraftstoff über einen langen und dünnen, kapillarähnlichen Zuführkanal bei großem Abstand zwischen Vorkammer und Zumessstelle zugeführt wird, wodurch die thermische Belastung des insbesondere durch ein Elektromagneten betätigten Ventils gering bleibt.

Um bestmögliche Entflammung des angereicherten Gemischs an der Zündstelle zu gewährleisten ist bei dem Verfahren die Regelung der Gemischzusammensetzung an der Zündstelle mit Auswertung des an der Zündkerze gemessenen lonenstromverlaufs vorgesehen (siehe auch DE-OS 198 19 197).

Weiterhin wird die Aufgabe durch eine im wesentlichen zylindrischen Zündkammer gelöst, bei der die Zumischung insbesondere aus radialer Richtung im mittleren Bereich der Vorkammer erfolgt.

Nach Zuführung des Zusatzkraftstoffes in die Vorkammer wird dieser Kraftstoff während des Verdichtungstaktes der Brennkraftmaschine intensiv mit dem aus dem Brennraum über die Überströmkanäle in die Zündkammer gelangenden besonders kraftstoffarmen Gemisch durch die durch die Überstömkanäle bewirkte hohe Ladungsbewegung vermischt und in Form einer Pfropfenströmung in den oberen Teil der Vorkammer transportiert, wobei durch die Verwirbelung bis zu den dort befindlichen Zündelektroden eine von Arbeitszylus zu Arbeitszyklus gleichmässig gute Vermischung im Bereich der Zündelektroden erreicht wird.

Als Folge der Zündung und nachfolgenden Verbrennung in der Vorkammer kommt es zu einem Druck- und Temperaturanstieg und infolge dessen durch die Überströmkanäle im Hauptbrennraum Zündfackeln austreten, die für eine sichere und gleichmässige Zündung des dortigen extrem abgemagerten Kraftstoff-Luft-Gemischs sorgen.

Bei Verwendung eines gasförmigen Zusatzkraftstoffs ergibt sich in dem dünnen Versorgungskanal eine Rückverdichtung des Gases, wobei es aber wegen des sehr kleinen Querschnitts zu keiner nennenswerten Längsvermischung zwischen heißen verbrannten Gasen und dem gasförmigen Kraftstoff kommt, d.h., es können keine heissen Gase in den Bereich eines am Ende des Versorgungskanals angeordneten Zumessventils gelangen, so dass die thermische Belastung des Zumessventils gering bleibt.

Durch die in den Unteransprüchen aufgeführten Massnahmen sind vorteilhafte Weiterbildungen und Verbesserungen des im 1. Anspruch angegebenen Verfahrens möglich.

Damit die Herstellung des Versorgungskanals vereinfacht wird, befindet sich dieser in einem geraden Versorgungskanalträger. Um eine Berührung mit dem Kühlwassersystem der Brennkraftmaschine zu vermeiden und die Fertigung zu vereinfachen ist es sinnvoll, den Versorgungskanalträger im wesentlichen parallel zur Unterseite des Zylinderkopfs anzuordnen, wobei das Zumessventil seitlich am Zylinderkopf eingeschraubt wird.

Als Ventil zur Zumessung des Zusatzkraftstoffs eignet sich insbesondere ein elektromagnetisch gesteuertes Ventil, wie es z.B. zur Hochdruck-Direkteinspritzung bei Brennkraftmaschinen verwendet wird. Zur Erhöhung der Funktionssicherheit und der Zumessgenauigkeit kann zwischen dem Zumessventil und der Austrittsöffnung des Versorgungskanals noch ein Rückschlagventil angeordnet sein.

Durch einen Ringkanal mit insbesondere mehreren radial zur Achse der Vorkammer ausgerichteten Zulaufbohrungen im Bereich des Zündkerzengewindes wird sichergestellt, dass bei der Zuführung des Zusatzkraftstoffs ein ungehinderter radialer Zugang des Zusatzkraftstoffs gesichert ist. Dabei ergibt sich eine besonders vorteilhafte Zumischung im äußeren Bereich des von unten nach oben in der Vorkammer aufsteigenden Gemischwirbels.

Zur Verbesserung der Kühlung des dünnen Versorgungskanals für den Zusatzkraftstoff kann die Kühlwasserführung im Zylinderkopf so modifiziert werden, dass sich eine ausreichende Wärmeabfuhr ergibt.

Ein Ausführungsbeispiel der Erfindung ist in Zeichnungen dargestellt und in der nachfolgenden Beschreibung näher erläutert. Es zeigen:
Fig. 1 das Ausführungsbeispiel mit Vorkammer-Zündkerze, Versorgungskanal und Zumessventil,
Fig. 2 die zweckmässigerweise als Einheit ausgebildete Anordnung von Versorgungskanalträger und Zumessventil,
Fig. 3 die einschraubbare Vorkammer-Zündkerze mit vorderem Teil des Versorgungskanalträgers sowie
Fig. 4 einen Schnitt durch den vorderen Teil der Vorkammer, die als Wirbelkammer mit tangentialen Überströmkanälen und zentralem Kanal ausgebildet ist.

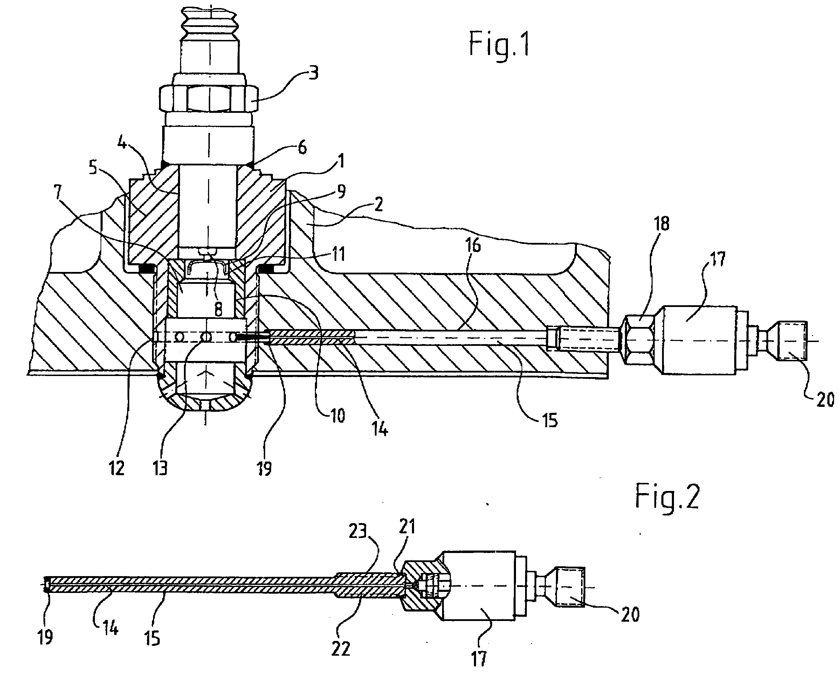

Die in Fig. 1 als Ausführungsbeispiel dargestellte Zündkerze mit Vorkammer (1) ist üblicherweise in einen Zylinderkopf (2) eingeschraubt, wobei zum Ein- und Ausschrauben mit einem Schraubenschlüssel z.B. ein Sechskant (3) verwendet wird. Zur Herstellung der Vorkammer-Zündkerze (1) kann insbesondere eine übliche Zündkerze modifiziert werden, in dem z.B. das übliche Einschraubgewinde durch Bearbeitung in eine zylindrische Form (4) gebracht wird und mit dem Grundträger der Vorkammer (7) durch die Schweissnaht (6) verschweißt wird. An der in die Vorkammer (7) hineinragenden Zentralelektrode der Zündkerze (8) sind wie bekannt mehrere Einzelelektroden (9) angeordnet, die mit der temperaturfesten, im wesentlichen zylindrischen Wand (10) der Vorkammer mehrere Funkenstrecken bilden (11).

Um eine sichere Versorgung der Vorkammer mit Zusatzkraftstoff in allen Einschraubpositionen bzw. Drehwinkelpositionen der Vorkammer-Zündkerze zu gewährleisten, enthält diese im Gewindebereich einen Ringkanal (12) mit insbesondere mehreren radial in die Vorkammer gerichteten Zulaufbohrungen (13). Der kapillarähnliche Versorgungskanal (14) befindet sich in einem Versorgungskanalträger (15), der zweckmässig im wesentlichen parallel zur Zylinderkopfoberfläche in einer Bohrung (16) angeordnet ist, wobei der Träger (15) beispielhaft mit dem Zumessventil (17) verbunden ist. Durch Einschrauben der Einheit aus Versorgungskanalträger (15) und Zumessventil (17) wird bei Verwendung eines Sechskants (18) und einer Dichtung (19) auf der Stirnseite des Versorgungskanalträgers (15) der Versorgungskanal im vorderen Bereich abgedichtet.

Fig. 2 zeigt die integrierte Einheit aus Versorgungskanalträger (15) und Zumessventil (17) mit dem daran befestigtem Kraftstoffanschluß (20). Der Versorgungskanal (14) im Versorgungskanalträger ist vorzugsweise kreisförmig und besitzt dabei einen Durchmesser von < 0,8 mm, vorzugsweise 0,1 - 0,3 mm.

Die Herstellung erfolgt nach bekannten Verfahren zur Herstellung von Metallkapillaren z.B., indem man zwei halbkreisförmige Einzelteile auf ihrer flachen Seite im mittleren Bereich mit einer halbkreisförmigen Längsnut versieht und nachfolgend beide Teile durch Löten oder Schweißen so miteinander verbindet, dass die halbkreisförmigen Längsnuten angepasst aufeinander liegen . Eine weitere Möglichkeit zur Herstellung besteht darin, dass man ein Rohr mit vergleichsweise großem Innendurchmesser nach Einlegen eines Drahtes in die innere Öffnung des Rohres so lange durch Walzen o.ä. verformt, bis die Bohrung allseitig am Draht anliegt. In einem weiteren Arbeitsschritt wird der Draht aus dem Rohr entfernt.

Die Befestigung des Versorgungskanalträgers (15) am Zumessventil (17) kann z.B. über eine Verschweissung (21) erfolgen, die eine zylindrische Verstärkung (22) im hinteren Teil des Versorgungskanalträgers (15) mit dem Zumessventil (17) verbindet. Auf der Verstärkung (22) ist dabei das Einschraubgewinde (23) der gemeinsamen Einheit aus Versorgungskanalträgers (15) und Zumessventil (17) aufgebracht.

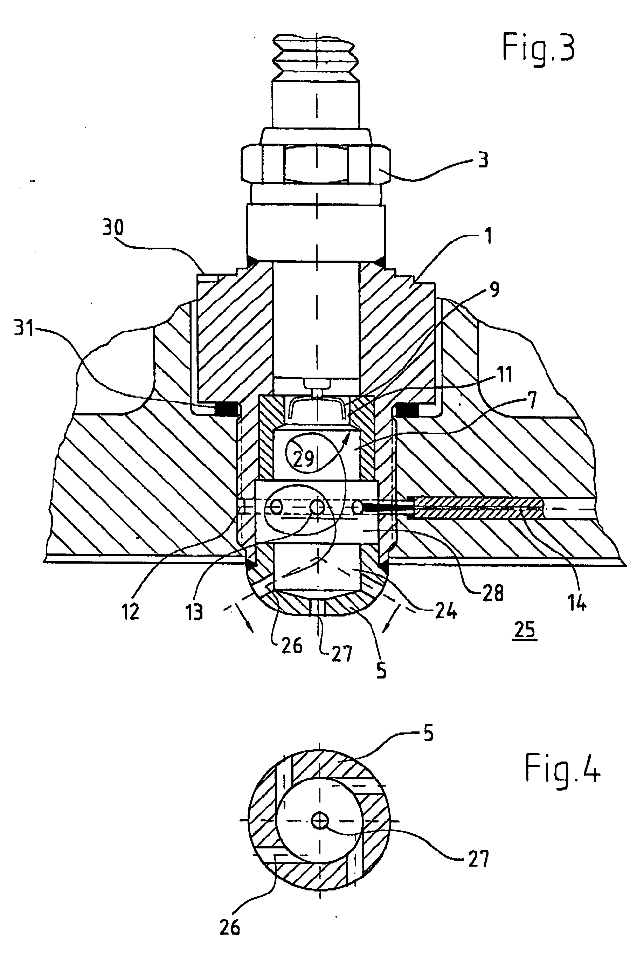

In Fig. 3 sind weitere beispielhafte Einzelheiten zur Vorkammer-Zündkerze für die Entflammung sehr magerer Kraftstoff-Luft-Gemische dargestellt. Danach weist das Vorkammergehäuse (5) im unteren Bereich (24) schräg nach unten zum Hauptbrennraum (25), insbesondere tangential in die Vorkammer (7) einmündende Überströmkanäle (26) sowie einen zusätzlichen axial nach unten verlaufenden Überströmkanal (27) auf. Das Vorkammergehäuse (5) besitzt zweckmässig im mittleren Bereich einen erweiterten Innendurchmesser (28). Hierdurch ergeben sich einerseits kürzere und damit strömungverlustarme Zuströmbohrungen (13) für den Zuatzkraftstoff und andererseits besonders vorteilhafte Strömungsverhältnisse für eine gute Durchmischung zwischen dem in der Vorkammer schraubenförmig aufsteigenden Strom (29) mageren Gemischs aus dem Hauptbrennraum und dem Zusatzkraftstoff aus dem Versorgungskanal.

Wie schon erwähnt, befinden sich am Umfang der im Gewindebereich der Vorkammer-Zündkerze angeordneten Ringnut (12) eine größere Anzahl von im wesentlichen im gleichen Winkelabstand angeordneten Zulaufbohrungen (13). Um im besonderen Fall eine ungehinderte Strömung des Zusatzkraftstoffes aus dem Versorgungskanal (14) zu erreichen, besitzt die Zündkerze auf der oberen Seite für den Einschraubenden deutlich sichtbare Markierungen (30), die der Winkelrichtung der Zulaufbohrungen (13) entsprechen.

In Verbindung mit einer sichtbaren Markierung auf dem Zylinderkopf ist es damit möglich, die Vorkammer-Zündkerze bei Einhaltung eines vorgeschriebenen Anzugsmomentes soweit einzuschrauben, dass eine der Markierungen auf der Vorkammer-Zündkerze mit der Markierung am Zylinderkopf zur Deckung kommt. Damit wird erreicht, dass der Versorgungskanal (14) gegenüber der Zulaufbohrung (13) positioniert ist und somit Zusatzkraftstoff ungehindert und ohne Umlenkungen in die Vorkammer (7) einströmen kann.

Fig. 4 zeigt dazu die schräg nach unten zum Hauptbrennraum (25) verlaufenden, tangential in die Vorkammer (7) einmündenden Überströmkanäle (26) sowie den zusätzlichen axial nach unten verlaufenden Überströmkanal (27) in Form eines Schnitts durch den vorderen Teil der Vorkammer-Zündkerze (1).

## Patentansprüche

1. Verfahren zur Entflammung sehr magerer Kraftstoff-Luft-Gemische mittels einer im Hauptbrennraum einer Brennkraftmaschine angeordneten fremdgezündeten Vorkammer-Zündeinrichtung, die über vorzugsweise tangential verlaufende Überströmkanäle mit dem Hauptbrennraum verbunden ist, wobei Zusatzkraftstoff ventilgesteuert in die Vorkammer eingebracht wird, und wobei die Zufuhr des Kraftstoffs über einen dünnen kapillarähnlichen Versorgungskanal (14) bei Zumessung mit einem Zumessventil (17) erfolgt, das sich in einem größeren Abstand zur Zündkammer befindet,
**dadurch gekennzeichnet, dass** der Versorgungskanal (14) mit dem Zumessventil (17) für den Kraftstoff eine Baueinheit bildet, die in den Zylinderkopf einschraubbar ist.

2. Verfahren nach Anspruch 1, **dadurch gekennzeichnet, dass** die Zumessung des Kraftstoffs durch ein zeitgesteuertes, vorzugsweise mit einem durch einen Elektromagneten betätigtes Ventil erfolgt.

3. Verfahren nach Anspruch 1, **dadurch gekennzeichnet, dass** die Länge des in einem Versorgungskanalträger (15) angeordneten Versorgungskanals (14) L zum Durchmesser des Versorgungskanals (15) D, d.h. L/D > 100, vorzugsweise > 300 ist.

4. Verfahren nach einem der vorstehenden Ansprüche, **dadurch gekennzeichnet, dass** der Versorgungskanalträger (15) im Wesentlichen quer zur Hauptachse der im Wesentlichen zylindrischen Vorkammer (7) angeordnet ist.

5. Verfahren nach einem der vorstehenden Ansprüche, **dadurch gekennzeichnet, dass** die Zumessung des Zusatzkraftstoffs während der Verdichtungsphase der Brennkraftmaschine erfolgt.

6. Verfahren nach Anspruch 5, **dadurch gekennzeichnet, dass** eine Regelung der Gemischzusammensetzung an der Zündstelle mit Auswertung des an der Zündkerze gemessenen lonenstromverlaufs erfolgt.

7. Vorkammer-Zündkerze zur Entflammung sehr magerer Kraftstoff-Luft-Gemische, insbesondere von Gasmotoren, mit einer eine Zündstrecke umgebenden Vorkammer, die zum Hauptbrennraum führende Überströmkanäle aufweist, wobei mindestens in einem Bereich der Vorkammer (7) wenigstens eine Zulaufbohrung (13) für Zusatzkraftstoff angeordnet ist,
**dadurch gekennzeichnet**, die Zufuhr des Kraftstoffs über einen dünnen kapillarähnlichen Versorgungskanal (14) bei Zumessung mit einem Zumessventil (17) erfolgt, das sich in einem größeren Abstand zur Zündkammer befindet und dass der Versorgungskanal (14) mit dem Zumessventil (17) für den Kraftstoff eine Baueinheit bildet, die in den Zylinderkopf einschraubbar ist.

8. Vorkammer-Zündkerze nach Anspruch 7, **dadurch gekennzeichnet, dass** mindestens eine Zulaufbohrung (13) sich im Bereich des Zündkerzengewindes befindet.

9. Vorkammer-Zündkerze nach Anspruch 7 oder 8, **dadurch gekennzeichnet, dass** diese im Außenbereich des Gewindes mindestens einen Ringkanal (12) enthält, der mit dem Versorgungskanal (14) und mit der Vorkammer (7) in Verbindung steht.

10. Vorkammer-Zündkerze nach Anspruch 7 bis 9, **dadurch gekennzeichnet, dass** sich am Außenumfang des Ringkanals (12) mehrere Zulaufbohrungen (13) befinden.

11. Vorkammer-Zündkerze nach einem der vorstehenden Ansprüche, **dadurch gekennzeichnet, dass** sich auf der Oberseite der Zündkerze (1) insbesondere mehrere sichtbare Markierungen (30) befinden, wobei mit den Markierungen eine Zuordnung zu den Zugangsbohrungen (13) verbunden ist und mit den Markierungen beim Einschrauben der Zündkerze sichergestellt werden kann, dass mindestens eine der Zugangsbohrungen (13) fluchtend zum Versorgungskanal (14) für den Zusatzkraftstoff orientiert ist.

12. Vorkammer-Zündkerze nach Anspruch 11, **dadurch gekennzeichnet, dass** durch Verdrehung der Zündkerze mit dem Sechskantsteckanschluss (3) eine elastische Dichtung (31) so weit verformt wird, dass eine einzustellende Orientierung der Zugangsbohrungen (13) sicher erreicht wird.

13. Vorkammer-Zündkerze nach einem der vorstehenden Ansprüche, **dadurch gekennzeichnet, dass** diese zur Entflammung sehr magerer Kraftstoff-Luft-Gemische, insbesondere von Gasmotoren, dient.

## Claims

1. A method of igniting very lean fuel-air mixtures by means of a spark-ignited precombustion-chamber ignition device which is arranged in the main combustion chamber of an internal-combustion engine and is connected to the main combustion chamber via preferably tangentially extending transfer ducts, wherein additional fuel is introduced into the precombustion chamber by valve control and wherein the fuel is supplied via a thin, capillary-like supply duct (14) and metered by a metering valve (17) which is located at a relatively great distance from the ignition chamber, **characterised in that** the supply duct (14) and the metering valve (17) for the fuel together form a constructional unit which can be screwed into the cylinder head.

2. A method according to claim 1, **characterised in that** the fuel is metered by a time-controlled valve which is preferably actuated by an electromagnet.

3. A method according to claim 1, **characterised in that** the ratio of the length L of the supply duct (14), which is arranged in a supply-duct carrier (15), to the diameter D of the supply duct (14), i.e. L/D, is >100, preferably >300.

4. A method according to any one of the preceding claims, **characterised in that** the supply-duct carrier (15) is arranged substantially transversely to the main axis of the substantially cylindrical precombustion chamber (7).

5. A method according to any one of the preceding claims, **characterised in that** the additional fuel is metered during the compression phase of the internal-combustion engine.

6. A method according to claim 5, **characterised in that** adjustment of the mixture composition takes place at the ignition point with evaluation of the ionic current flow measured at the spark plug.

7. A precombustion-chamber spark plug for igniting very lean fuel-air mixtures, especially for gas engines, with a precombustion chamber which surrounds a starter gap and has transfer ducts leading to the main combustion chamber, wherein at least one feed bore (13) for additional fuel is arranged in at least one region of the precombustion chamber (7), **characterised in that** the fuel is supplied via a thin, capillary-like supply duct (14) and metered by a metering valve (17) which is located at a relatively great distance from the ignition chamber, and **in that** the supply duct (14) and the metering valve (17) for the fuel together form a constructional unit which can be screwed into the cylinder head.

8. A precombustion-chamber spark plug according to claim 7, **characterised in that** at least one feed bore (13) is located in the region of the spark-plug thread.

9. A precombustion-chamber spark plug according to claim 7 or 8, **characterised in that**, in the outer region of the thread, it contains at least one annular duct (12) which communicates with the supply duct (14) and the precombustion chamber (7).

10. A precombustion-chamber spark plug according to claims 7 to 9, **characterised in that** a plurality of feed bores (13) are located on the outer circumference of the annular duct (12).

11. A precombustion-chamber spark plug according to any one of the preceding claims, **characterised in that** in particular a plurality of visible markings (30) are provided on the upper side of the spark plug (1), wherein the markings are associated with the feed bores (13) and wherein, when the spark plug is screwed in, it can be ensured by means of the markings that at least one of the feed bores (13) is orientated so as to be aligned with the supply duct (14) for the additional fuel.

12. A precombustion-chamber spark plug according to claim 11, **characterised in that**, by rotating the spark plug by means of the hexagonal terminal (3), a resilient seal (31) is deformed to such an extent that a setting for the orientation of the feed bores (13) is reliably attained.

13. A precombustion-chamber spark plug according to any one of the preceding claims, **characterised in that** it serves to ignite very lean fuel-air mixtures, especially for gas engines.

## Revendications

1. Procédé pour l'allumage de mélanges carburant-air très pauvres au moyen d'un dispositif d'allumage-préchambre de combustion à allumage externe disposé dans le volume de combustion principal d'une machine à combustion interne, qui est relié au volume de combustion principal par des canaux d'admission s'étendant de préférence tangentiellement, du carburant supplémentaire étant amené à la préchambre de combustion sous commande de vanne, et l'amenée du carburant ayant lieu par l'intermédiaire d'un canal de distribution (14) mince analogue à un capillaire avec dosage par une vanne de dosage (17) qui se trouve à une plus grande distance de la chambre d'allumage,
**caractérisé par le fait que** le canal de distribution (14) forme une unité modulaire avec la vanne de dosage (17) pour le carburant, laquelle peut être vissée dans la tête de cylindre.

2. Procédé selon la revendication 1, **caractérisé par le fait que** le dosage du carburant a lieu par une vanne synchronisée, de préférence actionnée par un électroaimant.

3. Procédé selon la revendication 1, **caractérisé par le fait que** la longueur L du canal de distribution (14) disposé dans un support de canal de distribution (15) est, par rapport au diamètre D du canal de distribution (15), c'est-à-dire LID, supérieur à 100, de préférence supérieur à 300.

4. Procédé selon l'une des revendications précédentes, **caractérisé par le fait que** le support de canal de distribution (15) est disposé pour l'essentiel transversalement à l'axe principal de la préchambre de combustion (7) pour l'essentiel cylindrique.

5. Procédé selon l'une des revendications précédentes, **caractérisé par le fait que** le dosage du carburant supplémentaire a lieu pendant la phase de compression de la machine à combustion interne.

6. Procédé selon la revendication 5, **caractérisé par le fait qu'**une régulation de la composition du mélange a lieu au point d'allumage avec exploitation de la variation du flux ionique mesuré à la bougie d'allumage.

7. Préchambre de combustion à bougie d'allumage pour l'allumage de mélanges carburant air très pauvres, en particulier de moteurs à gaz, avec une préchambre de combustion entourant une bougie d'allumage qui présente des canaux d'admission conduisant au volume de combustion principal, au moins un alésage d'amenée (13) pour du carburant supplémentaire étant disposé dans au moins une zone de la préchambre de combustion,
**caractérisée par le fait que** l'amenée du carburant a lieu par l'intermédiaire d'un canal de distribution (14) mince analogue à un capillaire avec dosage par une vanne de dosage (17) qui se trouve à une plus grande distance de la chambre d'allumage et que le canal de distribution (14) pour le carburant forme une unité modulaire avec la vanne de dosage (17) pour le carburant, laquelle peut être vissée dans la tête de cylindre.

8. Préchambre de combustion à bougie d'allumage selon la revendication 7,
**caractérisée par le fait qu'**au moins un alésage d'amenée (13) se trouve dans la zone du taraudage de la bougie d'allumage.

9. Préchambre de combustion à bougie d'allumage selon la revendication 7 ou 8, **caractérisée par le fait que** celle-ci contient dans la zone extérieure du taraudage au moins un canal annulaire (12) qui se trouve en liaison avec le canal de distribution (14) et avec la préchambre de combustion (7).

10. Préchambre de combustion à bougie d'allumage selon l'une des revendications 7 à 9, **caractérisée par le fait que** plusieurs alésages d'amenée (13) se trouvent à la périphérie extérieure du canal annulaire (12).

11. Préchambre de combustion à bougie d'allumage selon l'une des revendications 7 à 10 précédentes, **caractérisée par le fait qu'**en particulier plusieurs marquages (30) visibles, se trouvent sur le côté supérieur de la bougie d'allumage (1), une affectation aux alésages d'amenée (13) étant liée aux marquages et pouvant être assuré par les marquages, lors du vissage de la bougie d'allumage, qu'au moins un des alésages d'amenée (13) est orienté aligné par rapport au canal de distribution (14) pour le carburant supplémentaire.

12. Préchambre de combustion à bougie d'allumage selon la revendication (11), **caractérisée par le fait qu'**un joint d'étanchéité élastique (31) est suffisamment déformé par rotation de la bougie d'allumage par le raccord six pans (3) pour qu'une orientation des alésages d'amenée (13) devant être réglée soit obtenue de manière sûre.

13. Préchambre de combustion à bougie d'allumage selon l'une des revendications 7 à 12 précédentes, **caractérisée par le fait que** celle-ci sert pour l'allumage de mélanges carburant-gaz très pauvres, en particulier de moteurs à gaz.
